# EUROPEAN PATENT APPLICATION

(11) **EP 4 711 498 A1**
(43) Date of publication of application: **18.03.2026**
(21) Application number: 25200444.5
(22) Date of filing: 05.09.2025
(51) Int. Cl.: C25B 1/04, C25B 1/23, C25B 3/03, C25B 3/26, C25B 9/23, C25B 9/77, C25B 11/04, C25B 15/029, C25B 15/033, C25B 15/08

(54) **MEMBRANE ELECTRODE ASSEMBLY AND ELECTROCHEMICAL CELL**

(30) Priority: 13.09.2024 JP 2024158712
(71) Applicant: KABUSHIKI KAISHA TOSHIBA, Kawasaki-shi, Kanagawa, 212-0013 (JP)
(72) Inventor: ONO, Akihiko, Kawasaki-shi, Kanagawa (JP); MIKOSHIBA, Satoshi, Kawasaki-shi, Kanagawa (JP); KIYOTA, Yasuhiro, Kawasaki-shi, Kanagawa (JP); KUDO, Yuki, Kawasaki-shi, Kanagawa (JP); KITAGAWA, Ryota, Kawasaki-shi, Kanagawa (JP)
(74) Representative: Hoffmann Eitle

(57) **Abstract**

A membrane electrode assembly includes a first electrode, a second electrode, an ion-exchange membrane provided between the first electrode and the second electrode, and an intermediate layer between the second electrode and the ion-exchange membrane. The intermediate layer is a conductive porous body.

## Description

### FIELD

Embodiments described herein relate generally to a membrane electrode assembly, an electrochemical cell, a stack and an electrolytic system.

### BACKGROUND

In recent years, there has been growing anticipation for renewable energy. Examples of renewable energy include solar power generation, hydroelectric power generation, wind power generation, and geothermal power generation.

Furthermore, as an effort to decarbonize, electrochemical reduction of carbon dioxide (CO₂) to convert it into chemical substances (chemical energy) such as carbon compound, for example, carbon monoxide (CO), formic acid (HCOOH), methanol (CH₃OH), methane (CH₄), acetic acid (CH₃COOH), ethanol (C₂H₅OH), ethane (C₂H₆), and ethylene (C₂H₄) is attracting attention. CO₂ electrolysis technology can simultaneously achieve power adjustment and CO₂ resource utilization by connecting a CO₂ electrolytic device to a variable power source or surplus power source using renewable energy.

### BRIEF DESCRIPTION OF THE DRAWINGS

FIG. 1 is a schematic diagram of a membrane electrode assembly according to an embodiment;
FIG. 2 is a schematic diagram of an electrochemical cell according to an embodiment;
FIG. 3 is a schematic diagram of a stack according to an embodiment;
FIG. 4 is a conceptual diagram of a configuration of an electrolytic device according to an embodiment;
FIG. 5 is a conceptual diagram of a configuration of an electrolytic device according to an embodiment; and
FIG. 6 is a flowchart of a refreshing processes according to an embodiment.

### DETAILED DESCRIPTION

A membrane electrode assembly includes a first electrode, a second electrode, an ion-exchange membrane provided between the first electrode and the second electrode, and an intermediate layer between the second electrode and the ion-exchange membrane. The intermediate layer is a conductive porous body.

Hereinafter, the embodiments will be described with reference to the drawings. It is to be noted that the same reference numerals are given to common components throughout the embodiments, and redundant explanations are omitted.

In the specification, values at 25 [°C] and 1 atm (atmosphere) are shown. Each thickness of the members represents an average of distance in a stacking direction.

The thickness and structure of members described in the specification can be known, for example, from one or more of images obtained by SEM (Scanning Electron Microscope), TEM (Transmission Electron Microscope), HAADF-STEM: High-Angle Annular Dark Field Scanning Transmission Electron Microscopy), and the like. The boundaries of the members described in the specification can be determined from one or more images obtained by scanning electron microscopy or transmission electron microscopy, SEM-EDS (Scanning Electron Microscopy with Energy Dispersive X-ray Spectroscopy) or TEM-EDX (Transmission Electron Microscopy with Energy Dispersive X-ray Spectroscopy), SIMS (Secondary Ion Mass Spectrometry), and the like. The composition of the members described in the specification can be determined by one SIMS, ICP-MS (Inductively Coupled Plasma Mass Spectrometry), SEM-EDX, TEM-EDX, or the like. The crystallinity of the members described in the specification can be evaluated, for example, from XRD (X-ray Diffraction), EBSD (Electron Backscatter Diffraction), images obtained by HAADF-STEM, SEM, TEM or the like. Materials contained in the members described in the specification (crystal defects, bonding states, etc.) can be evaluated from HAADF-STEP, PL (Photoluminescence), XPS (X-ray Photoelectron Spectroscopy), or the like. These analysis methods are examples and do not negate the specific analytical methods described in the specification.

### (FIRST EMBODIMENT)

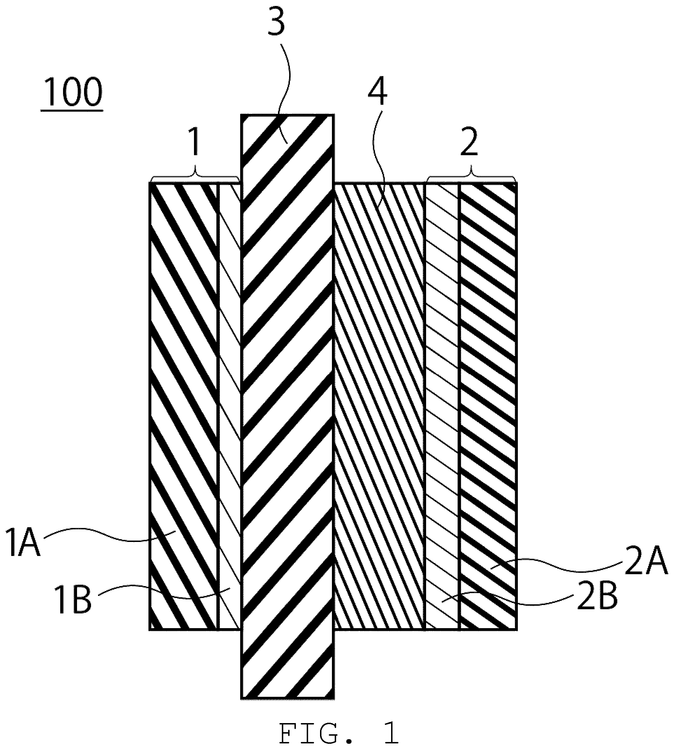

A first embodiment relates to a membrane electrode assembly. FIG. 1 shows a schematic cross-sectional diagram of a membrane electrode assembly 100 according to this embodiment. The membrane electrode assembly 100 includes a first electrode 1 that is an anode, a second electrode 2 that is a cathode, an ion-exchange membrane 3, and a intermediate layer 4.

The membrane electrode assembly 100 of the first embodiment is used, for example, in an electrochemical cell for electrolysis. A specific example of the electrolytic reaction of the membrane electrode assembly 100 is to supply water such as ultrapure water to the anode, decompose the water at the anode to generate protons and oxygen, pass the generated protons through the ion-exchange membrane, and supply carbon dioxide to the cathode. The reaction that generates carbon monoxide.

The first electrode 1 is the anode of the membrane electrode assembly 100. The first electrode 1 is an anode that oxidizes water to oxygen. The first electrode 1 has a first support 1A and a first catalyst layer 1B provided on the first support 1A. The first electrode 1 is arranged adjacent to the ion-exchange membrane 3. The first catalyst layer 1B of the first electrode 1 is provided on the side of the ion-exchange membrane 3. The first electrode 1 is preferably in direct contact with the ion-exchange membrane 3.

The first electrode 1 generates O₂ (oxygen) and H⁺ (protons) by oxidizing H₂O (water), for example.

The first support 1A is a support for the first catalyst layer 1B. The first support 1A is preferably an electrically conductive member that allows solutions and ions flowing through the first electrode 1 to pass. Examples of the first support 1A include mesh materials, punching materials, porous bodies of metal fiber sintering, and porous bodies of metal particle sintering. The first support 1A includes a metal or carbon
material. Metals that can be used for the first support 1A include titanium, aluminum, iron, nickel, tantalum, niobium, hafnium, zirconium, zinc, tungsten, bismuth, and antimony. The first catalyst layer 1B may contain metal elements included in the first support 1A. Examples of carbon materials include carbon paper and carbon cloth.

The first catalyst layer 1B is provided between the first support 1A and the ion-exchange membrane 3. The first catalyst layer 1B is preferably in direct contact with the first support 1A. The first catalyst layer 1B is preferably in direct contact with the ion-exchange membrane 3. The first catalyst layer 1B is preferably a porous body.

Examples of the first catalyst layer 1B include metals such as platinum (Pt), palladium (Pd), and nickel (Ni), alloys including elements of these metals, metal intermetallic compounds including elements of these metals, binary metal oxides such as manganese oxide (Mn-O), iridium oxide (Ir-O), nickel oxide (Ni-O), cobalt oxide (Co-O), iron oxide (Fe-O), tin oxide (Sn-O), indium oxide (In-O), ruthenium oxide (Ru-O), lithium oxide (Li-O) and lanthanum oxide (La-O), ternary metal oxides such as; Ni-Co-O, Ni-Fe-O, La-Co-O, Ni-La-O, Sr-Fe-O, quaternary metal oxides such as Pb-Ru-Ir-O and La-Sr-Co-O, metal complexes such as Ru complexes and Fe complexes. Two or more these materials may be included in the first catalyst layer 1B.

An anode solution, such as water, having a pH of 5 or more and 8 or less, preferably 5.5 or more and 7.5 or less, is supplied to the first electrode 1 as an anode solution. The electrical resistivity of the anode solution supplied to the first electrode 1 is preferably 0.1 [MΩ·cm] or more and 18.24 [MΩ·cm] or less (MΩ = 10⁶Ω). The pH of the anode solution in the first electrode 1 is preferably 1 or more and 7 or less, and more preferably 3 or more and 7 or less. The pH of the anode solution in the first electrode 1 is preferably measured at the outlet of the flow channel of the anode solution.

The metal ion concentration (total concentration of metal ion) in the anode solution contained in the first electrode 1 is preferably 0% or more and 10% or less, more preferably 0% or more and 7% or less, and even more preferably 1% or more and 5% or less, of the metal ion concentration (total concentration of metal ion) in the electrolytic solution of the intermediate layer 4.

The concentration of carbonate ions (total concentration of HCO₃⁻ and CO₃²⁻) in the anode solution contained in the first electrode 1 is preferably 0% or more and 30% or less, more preferably 1% or more and 20% or less, and even more preferably 3% or more and 10% or less of the concentration of carbonate ions (total concentration of HCO₃⁻and CO₃²⁻) in the electrolytic solution of the intermediate layer 4.

The second electrode 2 is the cathode of the membrane electrode assembly 100. The second electrode 2 is a cathode that reduces carbon dioxide to produce carbon compounds. The second electrode 2 has a second support 2A and a second catalyst layer 2B provided on the second support 2A. The second electrode 2 is arranged adjacent to the ion-exchange membrane 3. The second catalyst layer 2B of the second electrode 2 is provided on the side of the intermediate layer 4. The second electrode 2 is preferably in direct contact with the intermediate layer 4.

For, example, the second electrode 2 reduces a carbon compound such as CO₂ (carbon dioxide), generating CO (carbon monoxide) and O₂ (oxygen), CH₄ (methane), C₂H₆ (ethane), C₂H₄ (ethylene), CH₃OH (methanol), C₂H₅OH (ethanol), C₂H₆O₂ (ethylene glycol). In the second electrode 2, hydrogen (H₂) can also be generated simultaneously with the reduction of carbon dioxide and the water reduction reaction.

A gas containing CO₂ is supplied to the second electrode 2. Preferably, 30 [vol%] or more and 100 [vol%] or less of the gas supplied to the second electrode 2 is CO₂. Liquids are supplied to the first electrode 1 and the intermediate layer 4, but a gas rather than a liquid is supplied to the second electrode 2.

The second support 2A is a support for the second catalyst layer 2B. The second support 2A is so-called a gas diffusion layer (GDL). The second support 2A is preferably an electrically conductive member that allows gas, solution, and ions flowing through the second electrode 2 to pass through. For example, the second support 2A can be carbon paper or carbon cloth.

Preferably, the second support 2A is subjected to a treatment that imparts moderate hydrophobicity. Hydrophobicity is a property with low affinity for water. Examples of hydrophobic materials include fluorocarbon resins such as polytetrafluoroethylene (PTFE), polychlorotrifluoroethylene, polyvinylidene fluoride, polyvinyl fluoride, and perfluoroalkoxy fluororesin. By incorporating these fluorocarbon resins into carbon paper, carbon cloth, or the like, the second support 2A with moderate hydrophobicity while maintaining conductivity can be obtained. A porous layer formed by aggregation of carbon particles such as carbon black may be included in the second support 2A between the carbon paper or carbon cloth and the second catalyst layer 2B. The average primary particle size of the carbon particles is, for example, 10 [nm] or more and 300 [nm] or less. These fluorocarbon resins may also be provided on these carbon particles. Carbon particles are provided between the carbon paper or carbon cloth and the second catalyst layer 2B.

The second support 2A and the second electrode 2 are preferably more hydrophobic than the first electrode 1 and more hydrophobic than the intermediate layer 4. The aqueous solution contained in the intermediate layer 4 is less likely to permeate to the side of the second support 2A due to the high hydrophobicity of the second support 2A.

The second catalyst layer 2B is provided between the second support 2A and the intermediate layer 4. The second catalyst layer 2B is preferably in direct contact with the second support 2A. The second catalyst layer 2B is preferably in direct contact with the intermediate layer 4. The second catalyst layer 2B is preferably a porous body.

For example, the second catalyst layer 2B includes metals such as gold (Au), silver (Ag), copper (Cu), platinum (Pt), palladium (Pd), nickel (Ni), cobalt (Co), iron (Fe), manganese (Mn), titanium (Ti), cadmium (Cd), zinc (Zn), indium (In), gallium (Ga), lead (Pb), tin (Sn), alloys including one or more elements selected from these metals, intermetallic compounds including one or more elements selected from these metals, carbon materials such as carbon (C), graphene, CNT (carbon nanotube), fullerene, ketjen black, and other carbon materials, and metal complexes such as Ru complexes and Re complexes can be mentioned. These catalyst materials are provided on the side of the intermediate layer 4 on the second support 2A.

The second catalyst layer 2B may contain an ionomer.

The ion-exchange membrane 3 is arranged between the first electrode 1 and the intermediate layer 4. The ion-exchange membrane 3 is preferably in direct contact with the intermediate layer 4. More preferably, the ion-exchange membrane 3 is in direct contact with the side of the intermediate layer 4 facing the first electrode 1.

The ion-exchange membrane 3 is preferably a cation exchange (proton conducting) membrane. As the ion-exchange membrane 3, a fluorinated polymer having one or more groups selected from the group consisting of sulfonic acid groups, sulfonimide groups, and sulfuric acid groups or an aromatic hydrocarbon polymer is preferable. As the ion-exchange membrane 3, a fluorinated polymer having a sulfonic acid group is preferable. Examples of such fluorinated polymers include Nafion (trademark: DuPont), Flemion (trademark: Asahi Kasei Corporation), Selemion (trademark: Asahi Kasei Corporation), Aquivion (trademark: Solvay Specialty Polymers) or Aciplex (trademark: Asahi Glass). When an anion exchange membrane or a porous membrane is used, CO₃²⁻ (carbonate ions) and HCO₃⁻(bicarbonate ions) generated on the cathode side are likely to pass through the ion-exchange membrane 3. Therefore, such cation exchange membrane is preferable for the ion-exchange membrane 3.

The thickness of the ion-exchange membrane 3 can be appropriately determined by considering characteristics such as the membrane permeability and durability. From the standpoint of strength, solubility, and MEA output characteristics, the thickness of the ion-exchange membrane 3 is preferably 20 [µm] or more and 500 [µm] or less, more preferably 30 [µm] or more and 300 [µm] or less, and even more preferably 50 [µm] or more and 200 [µm] or less.

The intermediate layer 4 is arranged between the ion-exchange membrane 3 and the second electrode 2. Preferably, the side of the intermediate layer 4 facing the second electrode 2 is in direct contact with the second catalyst layer 2B of the second electrode 2. Preferably, the side of the intermediate layer 4 opposite to the side facing the second electrode 2 is in direct contact with the ion-exchange membrane 3.

The intermediate layer 4 is preferably a porous body. More preferably, the intermediate layer 4 is a conductive porous body. The intermediate layer 4 is preferably hydrophilic. More preferably, the intermediate layer 4 is a conductive porous body, and the conductive porous body is hydrophilic.

The intermediate layer 4 preferably has cation permeability.

Preferably, the intermediate layer 4 includes carbon material(s) and/or metal material(s). More preferably, the intermediate layer 4 includes one or more selected from the group consisting of carbon particles, carbon fibers, metal fibers, and metal particles. Even more preferably, the intermediate layer 4 is composed of one or more selected from the group consisting of carbon particles, carbon fibers, metal fibers, and metal particles.

The porosity of the intermediate layer 4 is preferably 30 [vol%] or more and 80 [vol%] or less, more preferably 40 [vol%] or more and 75 [vol%] or less, and even more preferably 50 [vol%] or more and 70 [vol%] or less.

The volume resistivity of the intermediate layer 4 is preferably 0.01 [Ω·cm] or more and 100 [Ω·cm] or less, more preferably 0.1 [Ω·cm] or more and 50 [Ω·cm] or less, and even more preferably 0.2 [Ω·cm] or more and 10 [Ω·cm] or less.

The intermediate layer 4 includes an electrolyte solution including metal ion. Aqueous solution is preferable as the electrolyte solution included in the intermediate layer 4. The metal ion included in the electrolyte solution included in the intermediate layer 4 is a monovalent metal ion. More preferably, the metal ion included in the electrolyte solution included in the intermediate layer 4 is a monovalent alkali metal ion. The metal ion included in the electrolyte solution included in the intermediate layer 4 includes preferably one or more selected from the group consisting of potassium ion, sodium ion, lithium ion, platinum ion, manganese ion, and cerium ion, more preferably one or more selected from the group consisting of potassium ions, sodium ion, and lithium ion.

The anion (counter ion of the metal ion) included in the electrolyte solution of the intermediate layer 4 is preferably one or more selected from the group consisting of HCO₃⁻ (bicarbonate ions) and CO₃²⁻ (carbonate ions), and more preferably HCO₃⁻ (bicarbonate ions) and/or CO₃²⁻ (carbonate ions). Furthermore, phosphate ions, phosphite ions (HPO₃²⁻), borate ions, and the like may be additionally included for improved electrolyte conductivity, improved ion mobility performance, pH adjustment, and improved catalytic performance.

The concentration of the metal ion included in the electrolyte solution is preferably 0.01 [mol/L] or more and 1 [mol/L] or less, more preferably 0.03 [mol/L] or more and 0.7 [mol/L] or less, and even more preferably 0.05 [mol/L] or more and 0.5 [mol/L] or less.

The concentration of the above-mentioned anion included in the electrolyte solution is preferably 0.1 [mol/L] or more and 1 [mol/L] or less, more preferably 0.2 [mol/L] or more and 1 [mol/L] or less, and even more preferably 0.3 [mol/L] or more and 0.7 [mol/L] or less.

The electrolyte solution of the intermediate layer 4 is preferably an aqueous solution including preferably one or more selected from the group consisting of KHCO₃, NaHCO₃, LiHCO₃, RbCO₃, and CsCO₃, more preferably one or more selected from the group consisting of KHCO₃, NaHCO₃, and LiHCO₃, preferably one selected from the group consisting of KHCO₃, NaHCO₃, and LiHCO₃, more preferably KHCO₃.

The pH of the electrolyte solution included in the intermediate layer 4 is preferably 3 or more and 9 or less, more preferably 4 or more and 8.5 or less, and even more preferably 5 or more and 8 or less.

The difference between the pH of the electrolyte solution included in the intermediate layer 4 and the pH of the water contained in the first electrode 1 is preferably 0.1 or more and 7 or less, more preferably 1 or more and 6 or less, and even more preferably 1 or more and 4 or less.

Although the electrolyte solution is supplied to the intermediate layer 4, since a cation exchange membrane is used for the ion-exchange membrane 3, the anions included in the electrolyte solution are difficult to move from the cation exchange membrane to the first electrode 1.

The thickness of the intermediate layer 4 is preferably 10 [µm] or more and 500 [µm] or less, more preferably 20 [µm] or more and 400 [µm] or less, and even more preferably 30 [µm] or more and 300 [µm] or less.

The thickness of the intermediate layer 4 is preferably 1 time or more and 3 times or less the thickness of the ion-exchange membrane 3, more preferably 1 time or more and 2.5 times or less, and even more preferably 1 time or more and 2 times or less.

When CO₂ supplied to the cathode and metal ion included in the electrolyte solution supplied to the membrane electrode assembly 100 pass through the ion-exchange membrane 3 and reach the cathode, the metal ion and CO₂ (ions) react easily to form carbonates. In the embodiment of the membrane electrode assembly 100, the movement of metal ion to the cathode is reduced, so carbonate formation is effectively reduced. Even when (not large amount of) carbonates are formed on the cathode side, they can be washed away with water.

Furthermore, by using a cation exchange membrane for the ion-exchange membrane 3, even when CO₂ supplied to the cathode is ionized, the ionized CO₂ is difficult to pass through the ion-exchange membrane 3, so the loss of CO₂ supplied as raw material is small. This embodiment of the membrane electrode assembly 100 has the advantage that the loss of CO₂ supplied as a raw material is small.

### (SECOND EMBODIMENT)

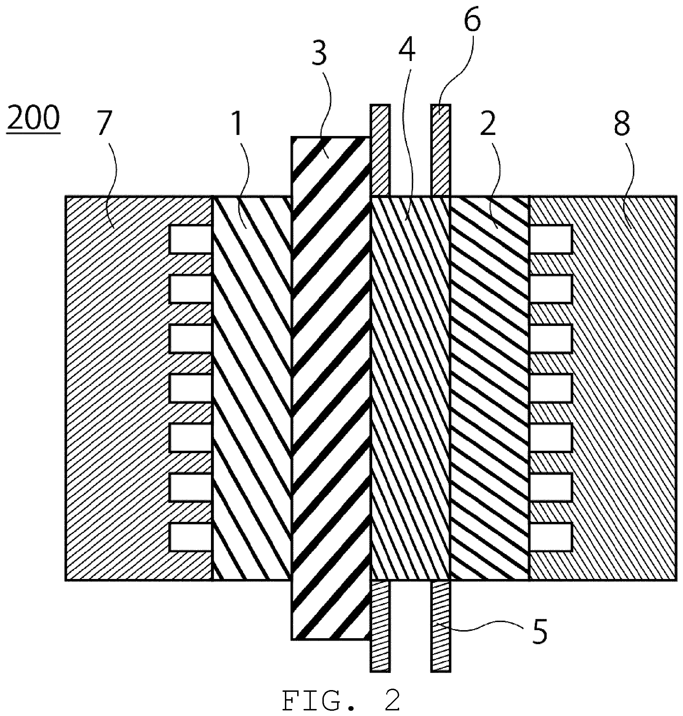

A second embodiment relates to an electrochemical cell. FIG. 2 illustrates a schematic diagram of an electrochemical cell 200 according to the second embodiment. The membrane electrode assembly 100 of the first embodiment is preferably used for the electrochemical cell 200 of the second embodiment.

As shown in FIG. 2, the electrochemical cell 200 according to the second embodiment includes the first electrode 1, the second electrode 2, the ion-exchange membrane 3, the intermediate layer 4, an electrolyte solution supply-channel 5, an electrolyte solution discharge-channel 6, a first separator 7, and a second separator 8. The electrochemical cell 200 may further include other components such as sealants, such as gaskets for sealing the electrodes, and current collectors.

The first electrode 1, the second electrode 2, the ion-exchange membrane 3, and the intermediate layer 4 of the second embodiment are the same as those of the first electrode 1, the second electrode 2, the ion-exchange membrane 3, and the intermediate layer 4 of the membrane electrode assembly 100 of the first embodiment. The first electrode 1 is an anode of the electrochemical cell 200, and the second electrode 2 is a cathode of the electrochemical cell 200.

The electrolyte solution supply-channel 5 is provided on one side of the intermediate layer 4 where neither the second electrode 2 nor the ion-exchange membrane 3 is provided. The electrolyte solution supply-channel 5, for example, is piping for supplying the electrolyte solution to the intermediate layer 4. The electrolyte solution included in the intermediate layer 4 is supplied to the intermediate layer 4 from the electrolyte solution supply-channel 5. The electrolyte solution is pumped by a pump (not shown) and supplied to the intermediate layer 4 through the electrolyte solution supply-channel 5.

When the electrolyte solution supply-channel 5 is in contact with the ion-exchange membrane 3, the electrolyte solution supply-channel 5 is preferably made of carbon material(s) and/or metal material(s). The electrolyte solution supply-channel 5 is preferably made of a solid material (piping) rather than a porous body.

The electrolyte solution discharge-channel 6 is provided on the side of the intermediate layer 4 where neither the second electrode 2 nor the ion-exchange membrane 3 nor the electrolyte solution supply-channel 5 is provided. The electrolyte solution included in the intermediate layer 4 is discharged from the electrolyte solution discharge-channel 6. The electrolyte solution discharge-channel 6, for example, is piping for discharging the electrolyte from the intermediate layer 4.

The first separator 7 is provided on the side of the first support 1A of the first electrode 1. The first separator 7 has a channel for supplying liquid water as an anode solution to the first electrode 1.

The second separator 8 is provided on the side of the second support 2A of the second electrode 2. The second separator 8 has a channel for supplying gas containing CO₂ to the second electrode 2.

Next, the operation of the electrochemical cell 200 will be described. A power supply is connected between the first electrode 1 and the second electrode 2, and a voltage is applied to the first electrode 1 and the second electrode 2. Liquid water (including an aqueous solution), preferably pure water, is supplied to the first separator 7, and water is supplied to the first electrode 1. The water supplied to the first electrode 1 reacts in the first catalyst layer 1B, and H₂O is reduced. Water is discharged from the outlet of the first separator 7.

CO₂ gas is supplied to the second separator 8, and CO₂ is supplied to the second electrode 2. The CO₂ supplied to the second electrode 2 reacts at the second electrode 2, and CO₂ is reduced to produce CO or the others. The generated products such as CO are collected from the outlet of the second separator 8.

The intermediate layer 4 is a channel where the electrolyte solution is supplied. The electrolyte solution is supplied to the intermediate layer 4. The amount of the electrolyte solution supplied to the intermediate layer 4 may be less than the amount of pure water supplied to the first electrode 1. The amount (volume) of the electrolyte solution supplied to the intermediate layer 4 is preferably 0.05 times or more and 0.9 times or less the amount of pure water supplied to the first electrode 1, more preferably 0.1 times or more and 0.2 times or less, and even more preferably 0.3 times or more and 0.8 times or less.

When the ion-exchange membrane 3 is a cation exchange membrane, carbon dioxide is difficult to pass through even when ionized. Therefore, the carbon dioxide supplied to the second electrode 2 is less likely to move to the side of the first electrode 1, which reduces the loss of carbon dioxide supplied to the second electrode 2.

For example, when KHCO₃ solution is used as the electrolyte solution in the electrochemical cell 200 and the second support 2A of the second electrode 2 is hydrophobic, potassium ions are less likely to move to the side of the second electrode 2 and are less likely to react with carbon dioxide supplied to the second electrode 2. Since the electrochemical cell 200 employs a configuration in which even when ions such as potassium ions are supplied, those potassium ions and carbon dioxide are less likely to react, the generation of reaction products of potassium ions and carbon dioxide (e.g., KHCO₃) on the side of the second electrode 2 can be reduced. Even when a compound such as KHCO₃ is formed at the second electrode 2, the generated KHCO₃ can be removed by supplying water to the second separator 8.

### (THIRD EMBODIMENT)

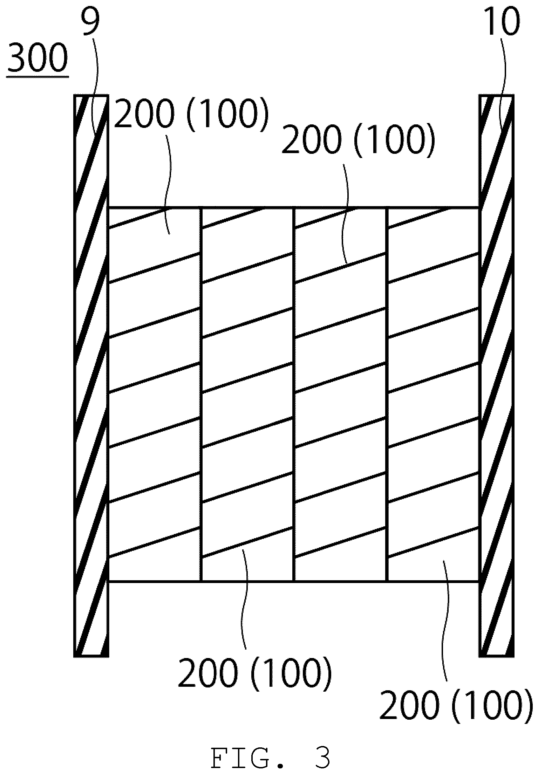

A third embodiment relates to a stack. FIG. 3 shows a cross-sectional diagram of the stack 300 according to the third embodiment. As shown in FIG. 3, the stack 300 of the third embodiment includes the membrane electrode assemblies 100 connected in series or the electrochemical cells 200 connected in series. Clamping plates 9 and 10 are attached to both ends of the membrane electrode assemblies 100 or electrochemical cells 200.

Since the amount of CO or the like produced in single electrochemical cell 200 consisting of single membrane electrode assembly 100 is small, when the stack 300 is configured by connecting a plurality of membrane electrode assemblies 100 or a plurality of electrochemical cells 200 in series, a large amount of CO or the like can be obtained.

### (FOURTH EMBODIMENT)

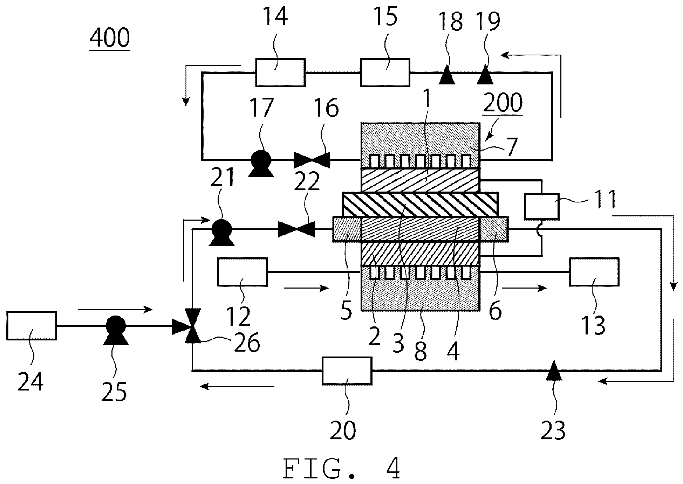

A fourth embodiment relates to an electrolytic device. FIG. 4 shows a conceptual diagram of the electrolytic device according to the fourth embodiment. The electrolytic device 400 uses an electrochemical cell 200 or a stack 300. The electrolytic device 400 in FIG. 4 is for CO₂ electrolysis, but it can also be used for other electrolyzing. The electrolytic device 400 shown in FIG. 4 illustrates a part of the configuration of an actual electrolytic device. For example, the electrolytic device 400 is controlled by a controller not shown in the figure. Arrows in the figure indicate the direction of fluid flow. Fluid flow may be in the opposite direction to that shown.

A power supply 11 is connected to the electrochemical cell 200, and a voltage is applied between the first electrode 1 and the second electrode 2 (anode/cathode). CO₂ gas is supplied from a CO₂ gas supply unit 12 to the second separator 8 of the second electrode (cathode) 2, where the CO₂ gas is used for the reaction at the second electrode 2. Products (e.g., CO gas) at the second electrode 2, including some unreacted CO₂ gas, are collected by a product storage unit 13. It is preferable to separate CO₂ gas from the products in the product storage unit 13.

Pure water is fed from a pure water tank 14 to the first separator 7 on the side of the first electrode 1 using a pump 17 and used for the reaction at the first electrode (anode) 1. A valve 16 is located between the pump 17 and the first separator 7. Water discharged from the first separator 7 through the first electrode 1 is filtered by a filter 15 such as an ion filter and then returned to the pure water tank 14. The conductivity and ion concentration of the water discharged from the first separator 7 are measured by a conductivity meter 18 and an ion concentration meter 19, respectively. The conductivity meter 18 and the ion concentration meter 19 measure the changes in conductivity and ion concentration that change due to impurities in the water discharged from the first separator 7.

The electrolyte solution is supplied from an electrolyte solution tank 20 to an electrolyte solution supply channel 5 connected to the intermediate layer 4 by a pump 21. A valve 22 is located between the pump 21 and the electrolyte solution supply channel 5. The electrolyte solution passing through the intermediate layer 4 is discharged from an electrolyte solution discharge channel 5. The ion concentration of the discharged electrolyte solution can be measured by an ion concentration meter 23. The electrolyte solution discharged from the intermediate layer 4 is returned to the electrolyte solution tank 20 for reuse. The electrolyte solution can be additionally supplied from an electrolyte solution replenishing tank 24. The electrolyte solution from the electrolyte solution replenishing tank 24 is fed by a pump 25 and joins a flow channel for the electrolyte solution through a valve 26.

### (FIFTH EMBODIMENT)

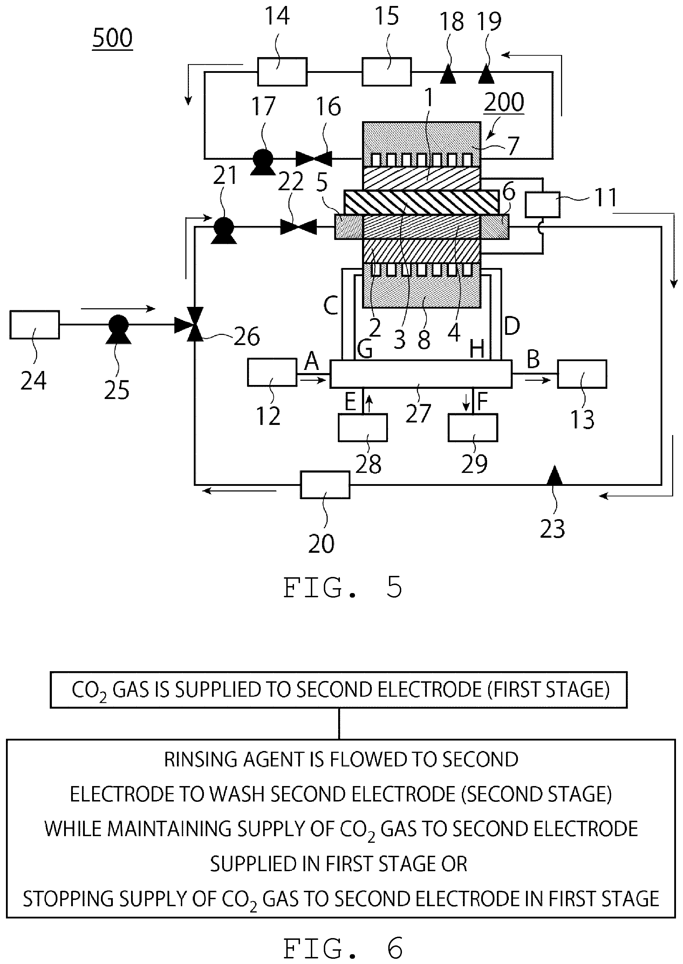

A fifth embodiment relates to an electrolytic system. FIG. 5 shows a conceptual diagram of the configuration of an electrolytic device 500 used in the electrolytic system according to the fifth embodiment. The electrolytic device 500 is a modified example of the electrolytic device 400. Descriptions common to the fourth embodiment electrolytic device 400 and the fifth embodiment electrolytic device 500 will be omitted.

The electrolytic device 500 further includes an element that performs a refresh operation on the second electrode 2, which is a cathode. The electrolytic device 500 has a valve 27, a rinsing agent supply unit 28 and a rinsing agent discharge unit 29. For example, the valve 27 may be one or more multi-position valves. As a multi-position valve, an 8-port valve with two positions can be used. The valve 27 controls the flow of CO₂ gas and rinsing agent during electrolytic operation and refresh operation. The rinsing agent is liquid and/or gaseous water, preferably pure water.

The refresh operation is performed as shown in the flowchart in FIG. 6. In a first stage, CO₂ gas is supplied to the second electrode 2 (specifically, CO₂ gas is flowed into the flow channel of the second separator 8). While maintaining the supply of CO₂ gas to the second electrode 2 supplied in the first stage or stopping the supply of CO₂ gas to the second electrode 2 in the first stage, rinsing agent is flowed to the second electrode 2 to wash the second electrode in a second stage (specifically, rinsing agent is flowed into a flow path of the second separator 8) to wash the second electrode 2. The direction of flowing the rinsing agent may be opposite to the direction in which CO₂ gas is supplied to the second electrode 2 during the first stage or the same direction as the direction in which CO₂ gas is supplied to the second electrode 2 during the first stage. In the second stage, when the rinsing agent is flowed in the opposite direction to the direction in which CO₂ gas has been supplied to the second electrode 2 in the first stage, CO₂ gas supply to the second electrode 2 is stopped or CO₂ gas is supplied in a direction opposite to that of CO₂ gas supply during the first stage.

Since water is supplied to the first electrode 1 during electrolytic operation, no refresh operation needs to be performed on the first electrode 1.

When the refresh operation is not performed, CO₂ gas supplied from the CO₂ gas supply unit 12 flows through the valve 27, passes through the second electrode 2, and flows again through the valve 27 to the product storage unit 13 (e.g., A-C-D-B route). When the refresh operation is not performed, the rinsing agent is either not supplied from the rinsing agent supply unit 28 or is looped between the rinsing agent supply unit 28 and the rinsing agent discharge unit 29 by the valve 27 (e.g., E-F route where the rinsing agent circulates).

When the refresh operation is performed, the rinsing agent supplied from the rinsing agent supply unit 28 flows through the valve 27, passes through the second electrode 2, and flows again through the valve 27 to the rinsing agent discharge means 29, where the rinsing agent used for the refresh operation is discharged (e.g., E-G-H-F route). The rinsing agent during the refresh operation may flow in a direction (e.g., E-H-G-F route) which is opposite to the direction in which the CO₂ gas flows during electrolytic operation (e.g., E-G-H-F route).

Since the direction of CO₂ gas flow is reversed, the amount of rinsing agent introduced to the second electrode becomes a smaller, preferably. By flowing the rinsing agent reversely to the CO₂ gas, salt deposition can be efficiently dissolved and discharged, particularly at the upstream portion where salt precipitation tends to occur most frequently in the flow channel of the second electrode 2. When the rinsing agent is flowed in the same direction as the CO₂ gas from upstream to downstream, considering salt dissolution, salt dissolves upstream, resulting in dissolution of a small amount of salt with a high salt concentration liquid. When the rinsing agent is reversely flowed with respect to the CO₂ gas, flowing the rinsing agent from the downstream side of the flow path results in efficient dissolution and discharge of a large amount of salt at the upstream side using a low-concentration salt solution. Therefore, when the rinsing agent flows reversely, even a small amount of rinsing agent can achieve a refresh effect. Moreover, it is preferable from the viewpoint that the water content of the second base material 2A and the second catalyst layer 2B can be reduced to maintain output.

FIG. 5 shows a configuration where paths C, D for CO₂ gas and paths G, H for rinsing agent are separated; however, CO₂ gas and rinsing agent may flow through a common path.

Preferably, the valve 27 controls the direction of CO₂ gas flow during the refresh operation so that CO₂ gas flowing is stopped, CO₂ gas loops between the CO₂ gas supply unit 12 and the valve 27, or CO₂ gas flows reversely compared to non-refresh operation (e.g., A-D-C-B route for the reverse flow). By controlling the valve 27 so that the CO₂ gas flows reversely compared to non-refresh operation, the electrolytic reaction can be maintained while performing the refresh operation, and the decrease in the electrolytic reaction due to the refresh operation can be reduced. When stopping the flow of CO₂ gas during the refresh operation, it is preferable to stop applying voltage from the power supply 11.

During non-refresh operation, stopping the flow of the rinsing agent and looping the rinsing agent between the rinsing agent supply unit 28 and the valve 27 are preferable.

During refresh operation, supplying the anode solution and/or the electrolyte solution can be stopped depending on the operating conditions.

Further, the direction of CO₂ gas flow can be reversed periodically. For example, CO₂ is flowed through the A-C-D-B route during the electrolytic operation (non-refresh operation) during the first stage; and CO₂ is flowed through the A-D-C-B route, and the rinsing agent is flowed through the E-H-G-F route in the electrolytic operation and refresh operation during the second stage. Subsequently, CO₂ is flowed through the A-D-C-B route in the electrolytic operation (non-refresh operation) during a third stage; and CO₂ is flowed through the A-C-D-B route, and rinsing agent is flowed through the E-G-H-F route in the electrolytic operation and refresh operation during a fourth stage. Following, CO₂ is flowed through the A-C-D-B route in the electrolytic operation (non-refresh operation) during a fifth stage. By reversing the direction of CO₂ gas flow during the refresh operation and flowing rinsing agent in the reversed direction, salt precipitation can be reduced from concentrating in one location.

The present invention will be described more specifically with reference to examples below. However, the present invention is not limited to these examples.

### (Example 1)

The electrochemical cell 200 having the configuration shown in FIG. 2 is fabricated. For the first electrode (anode) 1, an electrode coated with IrO₂ nanoparticles on a Ti mesh was used. For the second electrode (cathode) 2, a carbon particle coated with gold nanoparticles on carbon paper spray-coated with PTFE is used. Nafion, which is a cation exchange membrane, is used as the ion exchange membrane 3. A 100 [µm] thick hydrophilically treated PTFE is used as the intermediate layer 4. A solution of 0.1 [mol/L] KHCO₃ is supplied to the intermediate layer 4 at a flow rate of 4 [mL/min]. Pure water is supplied to the first electrode 1, and CO₂ gas is supplied to the second electrode 2. A power supply 11 is connected between the first electrode 1 and the second electrode 2, and electrolysis operation is performed. The amount of carbonate deposition on the second electrode 2 side is evaluated.

### (Comparative Example 1)

An electrochemical cell is fabricated differently from Example 1 without the intermediate layer 4 and using an anion exchange membrane for the ion exchange membrane 3. A solution of 0.1 [mol/L] KHCO₃ is supplied to the first electrode 1, and electrolysis operation was performed in the same manner as in Example 1. The amount of carbonate deposition on the second electrode 2 side is evaluated.

Both Example 1 and Comparative Example 1 confirmed the generation of CO from CO₂. The amount of carbonate precipitation was less in Example 1 compared to Comparative Example 1. The electrochemical cell 200 in Example 1 is useful in terms of continuous operating time, etc., due to the reduced carbonate deposition. Furthermore, for the electrochemical cell in Example 1, after a predetermined period of operation, the pressure loss of CO₂ gas at the second electrode 2 increased, and the Faradaic efficiency decreased to 50% or less. However, it was possible to recover the Faradaic efficiency by performing the refresh operation.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A membrane electrode assembly (100) comprising:
- a first electrode (1);
- a second electrode (2);
- an ion-exchange membrane (3) provided between the first electrode (1) and the second electrode (2); and
- an intermediate layer (4) between the second electrode (2) and the ion-exchange membrane (3),
wherein the intermediate layer (4) is a conductive porous body.

2. The membrane electrode assembly (100) of claim 1, wherein
- the first electrode (1) is an anode which generates oxygen by oxidizing water,
- the second electrode (2) is a cathode which generates a carbon compound by reducing carbon dioxide, and
- the intermediate layer (4) is a channel where an electrolyte solution is supplied.

3. The membrane electrode assembly (100) of claim 1 or 2, wherein the second electrode (2) is hydrophobic, and the intermediate layer (4) is hydrophilic.

4. The membrane electrode assembly (100) of any of claims 1-3, wherein the ion-exchange membrane (3) is a cation-exchange membrane.

5. The membrane electrode assembly (100) of any of claims 1-4, wherein the intermediate layer (4) comprises carbon material and/or metal material.

6. The membrane electrode assembly (100) of any of claims 1-5, wherein the intermediate layer (4) is in direct contact with the ion-exchange membrane (3).

7. The membrane electrode assembly (100) of any of claims 1-6, wherein
- the second electrode (2) comprises a support (2A) and a catalyst layer (2B) on the support (2A), and
- the intermediate layer (4) is in direct contact with the catalyst layer (2B).

8. The membrane electrode assembly (100) of any of claims 1-7, wherein the volume resistivity of the intermediate layer (4) is 0.01-100 Ω·cm.

9. The membrane electrode assembly (100) of any of claims 1-8, wherein the thickness of the intermediate layer (4) is 10-500 µm, and is 1-3 times the thickness of the ion-exchange membrane (3).

10. The membrane electrode assembly (100) of claim 2, wherein the water of the first electrode (1) is pure water having an electrical resistivity of 0.1-18.24 MΩ·cm.

11. The membrane electrode assembly (100) of claim 2 or 10, wherein the water of the first electrode (1) is pure water having a pH of 5-8.

12. The membrane electrode assembly (100) of any of claims 2, 10 and 11, wherein the electrolyte solution includes metal ion.

13. The membrane electrode assembly (100) of any of claims 2 and 10-12, wherein the electrolyte solution includes HCO₃⁻and/or CO₃²⁻.

14. The membrane electrode assembly (100) of any of claims 2 and 10-13, wherein the electrolyte solution includes one or more selected from potassium ion, sodium ion, and lithium ion.

15. The electrochemical cell (200) comprising:
- the membrane electrode assembly (100) of any of claims 1-14;
- an electrolyte solution supply-channel (5) connected to the intermediate layer (4); and
- an electrolyte solution discharge-channel (6),
wherein
- pure water is supplied to the first electrode (1),
- CO₂ gas is supplied to the second electrode (2),
- an electrolyte solution is supplied to the intermediate layer (4), and
- an amount of the electrolyte solution supplied to the intermediate layer (4) is 0.05-0.9 times an amount of the pure water supplied to the first electrode (1).
